# EUROPEAN PATENT APPLICATION

(11) **EP 4 748 482 A1**
(43) Date of publication of application: **27.05.2026**
(21) Application number: 25212135.5
(22) Date of filing: 29.10.2025
(51) Int. Cl.: B01D 63/12, B01D 65/10

(54) **METHOD FOR REPRODUCING MEMBRANE ELEMENT AND MEMBRANE MODULE**

(30) Priority: 22.11.2024 IN 202411091094
(71) Applicant: Nitto Denko Corporation, Ibaraki-shi, Osaka 567-8680 (JP); Hydranautics, Oceanside, CA 92058 (US)
(72) Inventor: UDA, Yasuhiro, Ibaraki-shi, Osaka 567-8680 (JP); ISHIHARA, Satoru, Ibaraki-shi, Osaka 567-8680 (JP); KAMADA, Takashi, Ibaraki-shi, Osaka 567-8680 (JP); YELESWARAPU, Ravindra, 400 059 Andheri (East), Mumbai (IN); PAWAR, Sachin Shivaji, 400 059 Andheri (East), Mumbai (IN)
(74) Representative: Cabinet Beau de Loménie

(57) **Abstract**

Provided are a method for reproducing a membrane element, which does not need to change the structure of a membrane element to be reproduced, can reduce waste caused by used membrane elements and save resources to be introduced, and can restore a separation function, and a membrane module using the resulting reproduced membrane element.

A method for reproducing a membrane element for producing a reproduced membrane element using a part of a used membrane element (UE), the method comprising the steps of: cutting off at least both-side sealing parts of the used membrane element; unfolding membrane leaves (L) after cut-off and cutting off at least a peripheral-side sealing part (12) of the membrane leaves; replacing at least separation membranes (1) of the membrane leaves after unfolding and cut-off with new separation membranes; and obtaining a reproduced membrane element by forming both-side sealing parts and a peripheral-side sealing part that seal both-side ends and a peripheral-side end in an axial direction of the membrane leaves after replacement.

## Description

### BACKGROUND OF THE INVENTION

### Field of the Invention

The present invention relates to a method for reproducing a membrane element for producing a reproduced membrane element using a part of a used membrane element, and a membrane module using the resulting reproduced membrane element.

### Description of the Related Art

A typical structure of a spiral membrane element includes a plurality of membrane leaves each having a permeation-side spacer interposed between separation membranes facing each other and having both-side sealing parts and a peripheral-side sealing part that seal both-side ends and a peripheral-side end in an axial direction, supply-side spacers interposed between the membrane leaves, and a perforated central pipe around which the membrane leaves and the supply-side spacers are wound.

Such a spiral membrane element deteriorates in performance over time as a result of deterioration over time and contamination of a membrane surface and the like due to its use. The contamination of the membrane surface can be recovered to a certain extent by increasing a supply liquid-side flow rate according to flushing cleaning to physically wash contaminants or chemically cleaning according to chemical cleaning. However, since the recovery is limited, the membrane element itself needs to be replaced.

A method for treating a used membrane element after replacement has a major problem, and landfill disposal has a problem because the volume of a treatable site is finite, and a membrane element most of which is a plastic material is not decomposed in the ground and thus semi-permanently remains in the ground. Therefore, it is desired to reduce waste caused by used membrane elements as much as possible. The same applies to a case where incineration is performed.

As techniques for reusing a used membrane element, for example, there are a structure in which an exterior body of a spiral membrane element can be reused (Patent Documents 1 to 2), a structure in which an anti-telescoping device can be reused (Patent Document 3), a structure in which a central pipe can be reused (Patent Document 4), and the like.

However, in any of these techniques, the structure of the spiral membrane element needs to be changed from the conventional structure, and the used spiral membrane element that has been used so far cannot be reused.

On the other hand, Patent Document 5 proposes, as a method for reusing a used spiral membrane element having a conventional structure, a method in which a separation functional layer of an RO membrane element is removed with an acid aqueous solution or the like and reproduced into a UF membrane which is a porous support.

### Prior Art Document

### Patent Document

Patent Document 1: JP-A-2000-15063
Patent Document 2: JP-A-2012-183527
Patent Document 3: JP-A-2008-149322
Patent Document 4: JP-A-11-267467
Patent Document 5: JP-A-11-156169

### SUMMARY OF THE INVENTION

However, in the reproducing method described in Patent Document 5, since the used spiral membrane element cannot be reproduced as the same RO membrane element as that before reproduction, there has been a problem that the function of the original separation membrane cannot be restored.

Therefore, an object of the present invention is to provide a method for reproducing a membrane element, which does not need to change the structure of a membrane element to be reproduced, can reduce waste caused by used membrane elements and save resources to be introduced, and can restore a separation function, and a membrane module using the resulting reproduced membrane element.

This object can be attained by the present invention as described in the present invention.
[1] A method for reproducing a membrane element for producing a reproduced membrane element using a part of a used membrane element,
   in which the used membrane element includes a plurality of membrane leaves each having a permeation-side spacer interposed between separation membranes facing each other and having both-side sealing parts and a peripheral-side sealing part that seal both-side ends and a peripheral-side end in an axial direction, supply-side spacers interposed between the membrane leaves, and a perforated central pipe around which the membrane leaves and the supply-side spacers are wound, and
   the method includes the steps of:
      cutting off at least the both-side sealing parts of the used membrane element;
      unfolding the membrane leaves after cut-off and cutting off at least the peripheral-side sealing part of the membrane leaves;
      replacing at least the separation membranes of the membrane leaves after unfolding and cut-off with new separation membranes; and
      obtaining a reproduced membrane element by forming both-side sealing parts and a peripheral-side sealing part that seal both-side ends and a peripheral-side end in the axial direction of the membrane leaves after replacement.

According to the method for reproducing a membrane element of the present invention, since the structure itself of a used membrane element to be reproduced is the same as the conventional structure, it is not necessary to change the structure of the membrane element, and at least the separation membrane that is difficult to be restored in the state of the membrane element can be replaced with a new separation membrane. Therefore, the separation function can be restored while at least a part of the other members is reused. In addition, since at least a part of the members can be reused, the amount of plastic to be newly input is reduced, which saves valuable petroleum resources. As a result, it is possible to provide a method for reproducing a membrane element, which does not need to change the structure of a membrane element to be reproduced, can reduce waste caused by used membrane elements and save resources to be introduced, and can restore a separation function.

[2] The method for reproducing a membrane element according to [1], in which when the separation membranes are replaced with the new separation membranes, the supply-side spacers are replaced with reproduced supply-side spacers from which contaminants have been removed by washing or new supply-side spacers.

By replacing with reproduced supply-side spacers from which contaminants have been removed by washing or new supply-side spacers, it is possible to restore the function of the supply-side spacer which has been difficult to restore in the state of the membrane element.

[3] The method for reproducing a membrane element according to [1] or [2], in which the used membrane element has an exterior member, and the exterior member is removed after the both-side sealing parts are cut off.

By removing the exterior member after cutting off the both-side sealing parts, the exterior member can be easily removed even in a case of a structure in which the exterior member is integrated with an end member.

[4] The method for reproducing a membrane element according to any one of [1] to [3], in which the central pipe of the used membrane element is replaced with a reproduced central pipe whose length is adjusted by cutting, or a new central pipe.

The length in the axial direction of the separation membrane after cutting off the both-side sealing parts and after replacement with the permeation-side spacer is shortened, but the central pipe can be used for reproduction of the membrane element as a central pipe having an appropriate length by being replaced with a reproduced central pipe whose length is adjusted by cutting, or a new central pipe.

[5] A membrane module including membrane elements and a vessel accommodating the membrane element,
in which the membrane elements include a reproduced membrane element in which the length of separation membranes in an axial direction is shortened, produced using a part of a used membrane element, and
the reproduced membrane elements more than the number of the used membrane elements accommodated are accommodated in the vessel.

According to the membrane module of the present invention, even when a reproduced membrane element in which the length of the separation membranes in the axial direction is shortened is used, the reproduced membrane elements more than the number of the used membrane elements accommodated are accommodated in the vessel, so that a decrease in the total membrane area can be suppressed. Then, as the reproduced membrane element in which the length of the separation membranes in the axial direction is shortened, a reproduced membrane element obtained by reusing at least permeation-side spacers, and if necessary, supply-side spacers or a central pipe can be used. As a result, it is possible to provide a membrane module in which a reproduced membrane element obtained by reusing at least permeation-side spacers can be used while suppressing a decrease in the total membrane area.

[6] The membrane module according to [5], in which the reproduced membrane elements are connected to each other by an interconnector having an anti-telescoping function, or the reproduced membrane elements having an anti-telescoping function are connected to each other by an interconnector.

When the reproduced membrane elements are connected to each other by an interconnector having an anti-telescoping function, it is not necessary to attach an anti-telescoping device to the reproduced membrane elements, and a structure advantageous for suppressing a decrease in the total membrane area can be obtained. In addition, even when the reproduced membrane elements having an anti-telescoping function are connected to each other by an interconnector, reduction in the total membrane area can be suppressed by reducing the thickness of the anti-telescoping device of the reproduced membrane elements.

According to the method for reproducing a membrane element of the present invention, it is possible to provide a method for reproducing a membrane element, which does not need to change the structure of a membrane element to be reproduced, can reduce waste caused by used membrane elements and save resources to be introduced, and can restore a separation function.

According to the membrane module of the present invention, it is possible to provide a membrane module in which a reproduced membrane element obtained by reusing at least permeation-side spacers can be used while suppressing a decrease in the total membrane area.

### BRIEF DESCRIPTION OF THE DRAWINGS

Fig. 1A is a partially exploded perspective view illustrating an example of a membrane element as a target of a method for reproducing a membrane element of the present invention;
Fig. 1B is a perspective view illustrating a main portion obtained by cutting out a part of the example of the membrane element as a target of the method for reproducing a membrane element of the present invention;
Fig. 2A is a plan view illustrating an example of a step of cutting off both-side sealing parts;
Fig. 2B is an unfolded view illustrating the example of a step of cutting off both-side sealing parts, which shows one of membrane leaves in an unfolded state;
Fig. 3 is an unfolded view illustrating an example of a step of cutting off a peripheral-side sealing part, which shows one of membrane leaves in an unfolded state;
Fig. 4A is an unfolded view illustrating an example of a step of replacing with new separation membranes, which shows one of membrane leaves before replacement in an unfolded state;
Fig. 4B is an unfolded view illustrating an example of a step of replacing with new separation membranes, which shows one of membrane leaves during replacement in a unfolded state, and virtual lines continuous with the separation membranes indicate a state in which the separation membranes are folded;
Fig. 5A is a perspective view illustrating an example of a step of replacing with a new separation membrane, and indicates a state in which one new separation membrane and one supply-side spacer are inserted into a plurality of permeation-side spacers;
Fig. 5B is a perspective view illustrating an example of a step of replacing with new separation membranes, and illustrates a state in which a plurality of new separation membranes and supply-side spacers are inserted into a plurality of permeation-side spacers;
Fig. 6A is a plan view illustrating an example of a case of cutting off ends of a reproduced membrane element in which sealing parts are formed, and illustrates a state before cutting off;
Fig. 6B is a plan view illustrating the example of a case of cutting off ends of a reproduced membrane element in which sealing parts are formed, and illustrates a state after cutting off;
Fig. 7A is a cross-sectional view illustrating an example of a reproduced membrane element and an interconnector used in a membrane module of the present invention;
Fig. 7B is a cross-sectional view illustrating an example of a main portion of the membrane module of the present invention;
Fig. 8A is a cross-sectional view illustrating another example of the reproduced membrane element and the interconnector used in the membrane module of the present invention;
Fig. 8B is a cross-sectional view illustrating another example of the main portion of the membrane module of the present invention;
Fig. 9A is a cross-sectional view illustrating another example of the reproduced membrane element and the interconnector used in the membrane module of the present invention;
Fig. 9B is a cross-sectional view illustrating another example of the main portion of the membrane module of the present invention;
Fig. 10 is an unfolded view illustrating another example of a step of cutting off a peripheral-side sealing part, which shows one of membrane leaves in a unfolded state;
Fig. 11A is an unfolded view illustrating another example of a step of replacing with new separation membranes, which shows one of membrane leaves before replacement in a unfolded state; and
Fig. 11B is an unfolded view illustrating another example of a step of replacing with new separation membranes, which shows one of membrane leaves during replacement in a unfolded state, and virtual lines continuous with the separation membranes indicate a state in which the separation membranes are folded.

### DETAILED DESCRIPTION OF THE PREFERRED EMBODIMENTS

### (Method for Reproducing Membrane Element)

The method for reproducing a membrane element of the present invention is a method for reproducing a membrane element for producing a reproduced membrane element using a part of a used membrane element. The target membrane element is a spiral membrane element.

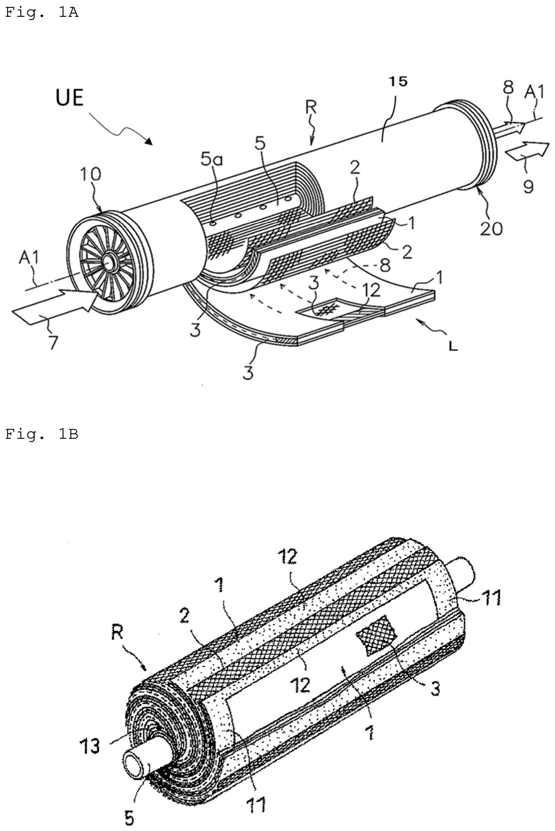

Fig. 1A is a partially exploded perspective view illustrating an example of a membrane element as a target of a method for reproducing a membrane element of the present invention, and Fig. 1B is a perspective view illustrating a main portion obtained by cutting out a part of the example of the membrane element as a target of the method for reproducing a membrane element of the present invention.

That is, as illustrated in, for example, Figs. 1A to 1B, a target used membrane element UE includes a plurality of membrane leaves L each having a permeation-side spacer 3 interposed between separation membranes 1 facing each other and having both-side sealing parts 11 and a peripheral-side sealing part 12 that seal both-side ends and a peripheral-side end in an axial direction A1, supply-side spacers 2 interposed between the membrane leaves L, and a perforated central pipe 5 around which the membrane leaves L and the supply-side spacers 2 are wound. First, this used membrane element will be described.

### (Used Membrane Element)

Examples of the used membrane element include those in which the function as a membrane element cannot be expected to be restored even if chemical cleaning or the like is performed, and specifically, the following states are indicated. (1) In regard to the salt rejection performance, a state in which the permeate flow rate is 50% or less of the initial value and the salt transmittance is 10% or more (the salt rejection is 90% or less) even if chemical cleaning (on-site cleaning or off-site cleaning) is repeatedly performed, and (2) a state in which, when the weight of the membrane element is compared with that of a new one, contaminants cannot be removed by increasing the initial value by 25% or more due to deposited deposits even if chemical cleaning (on-site cleaning or off-site cleaning) is repeatedly performed.

Any known spiral membrane element can be used as the used membrane element UE as long as it includes a plurality of membrane leaves L each having a permeation-side spacer 3 interposed between separation membranes 1 facing each other and having both-side sealing parts 11 and a peripheral-side sealing part 12 that seal both-side ends and a peripheral-side end in an axial direction A1, supply-side spacers 2 interposed between the membrane leaves L, and a perforated central pipe 5 around which the membrane leaves L and the supply-side spacers 2 are wound.

In this specification, the membrane leaves L and the supply-side spacers 2 wound around the central pipe 5 are referred to as a roll R, and the membrane element UE generally has a structure including an exterior member 15 on the outer periphery of the roll R as illustrated in Fig. 1A.

The membrane element UE is provided with both-side sealing parts 11 and a peripheral-side sealing part 12 as sealing parts for preventing mixing of a supply-side flow path and a permeation-side flow path. As illustrated in Fig. 1B, the both-side sealing parts 11 among the sealing parts are obtained by using an adhesive to seal two side ends on both sides in the axial direction A1 of each of the membrane leaves L. The peripheral-side sealing part 12 is obtained by using an adhesive to seal ends of the peripheral-side tip of each of the membrane leaves L. A space surrounded by the separation membranes 1 facing each other, the both-side sealing parts 11, and the peripheral-side sealing part 12 serves as the permeation-side flow-channel. This communicates with an opening 5a of the central pipe 5.

As illustrated in Fig. 1B, in the present invention, the membrane element may include a central-side sealing part 13 obtained by using an adhesive to seal the perforated central pipe 5 and a base end of each of the membrane leaves L. In this example, the membrane element includes the roll R in which the membrane leaf L and the supply-side spacers 2 are wound around the central pipe 5 with such a central-side sealing part 13 interposed therebetween. The adhesive is not particularly limited, and any conventionally known adhesive such as a urethane-based adhesive or an epoxy-based adhesive can be used.

In the general membrane element UE, as illustrated in Fig. 1A, an upstream-side end member 10 such as a seal carrier is provided on the upstream side of the roll R, and a downstream-side end member 20 such as an anti-telescoping device is provided on the downstream side. The upstream-side end member 10 and the downstream-side end member 20 may be integrated with the roll R by winding FRP serving as the exterior member 15 around the outer periphery of the roll R.

In a typical spiral membrane element having a diameter of 8 inches, about 15 to 30 sets of membrane leaves L are wound. When the membrane element UE is used, the membrane element UE is accommodated in a pressure vessel (vessel), and a supply liquid 7 is supplied from one end surface side of the membrane element.

As illustrated in Fig. 1A, the supplied supply liquid 7 flows along the supply-side spacers 2 into a direction parallel with the axial direction A1 of the central pipe 5, and is then discharged as a concentrated liquid 9 from the other end surface side of the membrane element UE. In the process in which the supply liquid 7 flows along the supply-side spacers 2, a permeation liquid 8 which has permeated through the separation membranes 1 flows along the permeation-side spacers 3, then flows into the central pipe 5 from the opening 5a, and is discharged from the end of the central pipe 5.

The supply-side spacer 2 generally has a function of ensuring spaces, the spaces being for uniformly supplying a fluid onto a membrane plane. The supply-side spacer 2 may be, for example, a net, a knitted fabric, or a sheet worked to have irregularities. Such a spacer that has a maximum thickness of about 0.1 to 3 mm can be appropriately used if necessary. The spacer is set on each of both surfaces of the separation membrane 1. Two different flow-channel members are generally used: one thereof is used, on the supply liquid side, as the supply-side spacer 2, and the other is used, on the permeation liquid side, as the permeation-side spacer 3. In the supply-side spacer 2, a thick network flow-channel having large meshes is used, and in the permeation-side spacer 3, a woven fabric or knitted fabric channel member having fine meshes is preferably used.

As illustrated in Fig. 1A, the central pipe 5 only needs to have the opening 5a around the pipe, and any conventional central pipe can be used. In general, in the case of use in seawater desalination, wastewater treatment or the like, permeated water that has permeated through the separation membrane 1 flows toward the central pipe 5 in the permeation-side flow-channel formed along the permeation-side spacer 3 interposed between the separation membranes 1 facing each other, then flows into the central pipe 5 from the opening 5a, flows in the central pipe 5, and is discharged from the end.

When an RO membrane or an NF membrane is used in applications such as seawater desalination and wastewater treatment, the permeation-side spacer 3 is interposed between the separation membranes 1 facing each other in the membrane leaves L as illustrated in Fig. 1A. The permeation-side spacer is required to support the separation membranes from the back sides of the membranes against pressure applied to the membrane, and further to ensure flow-channels for permeation liquid.

In order to ensure such a function, the permeation-side spacer 3 is preferably formed of a tricot knitted fabric, and more preferably a tricot knitted fabric subjected to resin impregnation reinforcement or fusion treatment after the formation of the knitted fabric.

As the separation membrane 1, various porous membranes can be used, but a composite semipermeable membrane including a separation functional layer on the surface of a porous support is preferable. The porous support preferably includes a polymer porous layer on one surface of a nonwoven fabric layer.

Such a composite semipermeable membrane is called an RO (reverse osmosis) membrane, an NF (nano-filtration) membrane, or an FO (forward osmosis) membrane depending on the filtration properties or treatment methods, and is usable for the production of super pure water, seawater desalination, desalinization of sprinkling water, and reuse of wastewater and the like.

Examples of the exterior member 15 include various sheets, films, and tapes, and if necessary, a fiber reinforced resin (FRP) or the like is used for reinforcement. A structure in which the upstream-side end member 10 and the downstream-side end member 20 are firmly integrated by exterior FRP makes it difficult to decompose the membrane element UE, but the present invention can remove the membrane element UE when cutting off the both-side sealing parts 11 without performing decomposition or the like.

### (Step of Cutting Off Both-Side Sealing Parts)

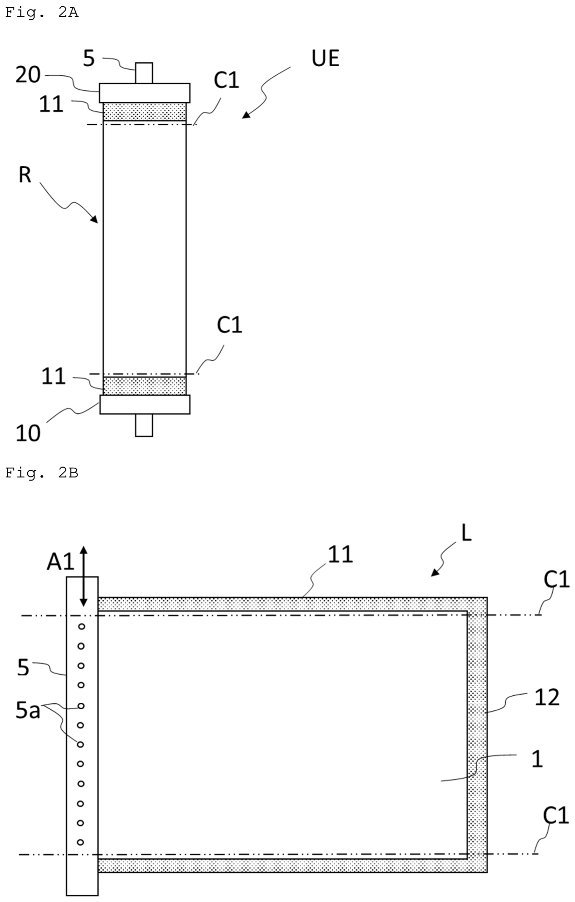

Fig. 2A is a plan view illustrating an example of a step of cutting off the both-side sealing parts 11, and Fig. 2B is an unfolded view illustrating the example of a step of cutting off the both-side sealing parts 11, which shows one of the membrane leaves L in a unfolded state.

The method for reproducing a membrane element of the present invention includes, for example, as illustrated in Figs. 2A to 2B, a step of cutting off at least both-side sealing parts 11 of the used membrane element UE. Here, the both-side sealing parts 11 usually include the separation membranes 1 facing each other and the permeation-side spacer 3 interposed therebetween. In this step, as illustrated in Fig. 2A, it is preferable to cut off both-side ends of the supply-side spacer 2 in the axial direction A1 when cutting off the both-side sealing parts 11.

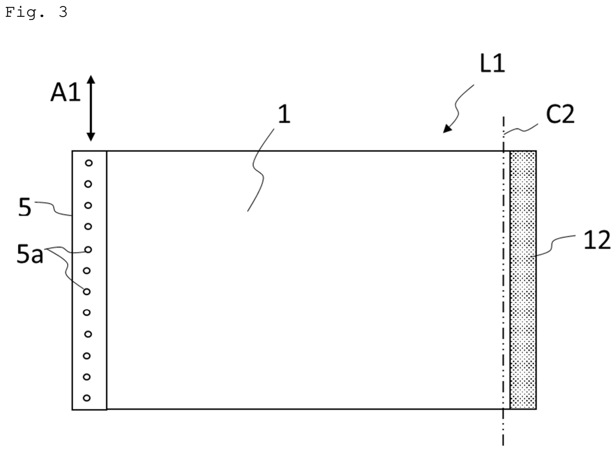

By this step, as illustrated in Fig. 3, a membrane leaf L1 is obtained in which the separation membranes 1 facing each other and the permeation-side spacer 3 are bonded to each other only by the peripheral-side sealing part 12 among the sealing parts at three side ends of the membrane leaf L. At this time, one or more membrane leaves L1 may be fixed (bonded or the like) to the central pipe 5 via the permeation-side spacer 3. In this case, inner peripheral side ends of one or more permeation-side spacers 3 may adhere to the central pipe 5. Further, inner peripheral side ends of one or more the other permeation-side spacers 3 may adhere to the inner peripheral side end of the permeation-side spacer 3 adhered to the central pipe 5 in advance. Namely, all the permeation-side spacer 3 may be directly or indirectly adhered to the central pipe 5. Also, when both-side ends of the supply-side spacer 2 are cut off, the length of the supply-side spacer 2 in the axial direction A1 can be made equal to the length of the permeation-side spacer 3.

In this step, it is sufficient that at least the both-side sealing parts 11 are cut off from the main body of the membrane element UE, and the end of the central pipe 5, the upstream-side end member 10, or the downstream-side end member 20 may be simultaneously cut off. That is, it is also possible to leave the ends without cutting the central pipe 5. In the present embodiment, an example is shown in which the both-side sealing parts 11, the both-side ends of the central pipe 5, the upstream-side end member 10, and the downstream-side end member 20 are cut off.

Examples of the method for cutting off the both-side sealing parts 11 include a method of removing both ends of the roll R including the both-side sealing parts 11 and both ends of the central pipe 5 from the main body of the membrane element UE by cutting at a cutting line C1, a method of separating both ends of the roll R including the both-side sealing parts 11 from the main body of the membrane element UE by cutting only the roll R without cutting the central pipe 5, and the like. Simultaneously or separately from these methods, it is also possible to remove the upstream-side end member 10 and the downstream-side end member 20. A method of removing the entire both ends of the roll R including the both-side sealing parts 11 by cutting away or the like may be used.

The width at the time of cutting off the both-side sealing parts 11 of the used membrane element UE is preferably 50 mm or less based on the length of the separation membrane 1 in the axial direction A1. In addition, it is preferable that the length of the separation membrane 1 after cut-off is 87% or more of the length before cut-off, based on the length of the separation membrane 1 before cut-off in the axial direction A1.

### (Step of Cutting Off Peripheral-Side Sealing Part)

Fig. 3 is an unfolded view illustrating an example of a step of cutting off the peripheral-side sealing part 12, which shows one of the membrane leaves L1 from which the both-side sealing parts 11 have been cut off in a unfolded state.

The method for reproducing a membrane element of the present invention includes, for example, as illustrated in Fig. 3, a step of unfolding the membrane leaf L1 after cut-off and cutting off at least the peripheral-side sealing part 12 of the membrane leaf L1. In the present embodiment, an example in which the peripheral-side sealing part 12 is cut by a cutting line C2 will be described. Here, the peripheral-side sealing part 12 usually includes the separation membranes 1 facing each other and the permeation-side spacer 3 interposed therebetween. In addition, "unfolding the membrane leaf L1" refers to opening the wound membrane leaf L1 so that the membrane leaf L1 can be easily cut, and the membrane leaf L1 does not necessarily have to be a flat surface.

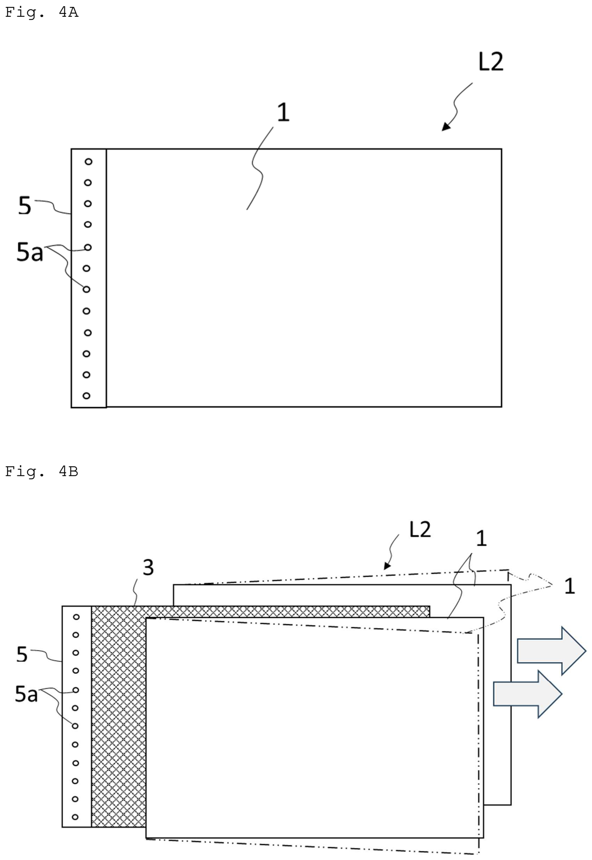

By this step, as illustrated in Fig. 4B, the sealing parts at three side ends of the membrane leaf L are removed to obtain a membrane leaf L2 capable of separating the separation membranes 1 facing each other and the permeation-side spacer 3. Thereby, the separation membranes 1 can be replaced with new separation membranes 1'. Further, when the membrane leaf L1 after cut-off is unfolded, or after unfolding, the supply-side spacer 2 can be easily removed. Therefore, the supply-side spacer 2 can be replaced before and after the peripheral-side sealing part 12 is cut off.

In this step, it is sufficient that at least the peripheral-side sealing part 12 is cut off from the main body of the membrane element UE, and other members such as an adhesive tape present around the roll R may be removed in advance or simultaneously. In addition, it is also possible to perform a step of removing the exterior member 15 after the both-side sealing parts 11 are cut off. The step of removing the exterior member 15 will be described later.

The width at the time of cutting off the peripheral-side sealing part 12 of the used membrane element UE is preferably 50 mm or less based on the length perpendicular to the axial direction A1 of the separation membrane 1. In addition, it is preferable that the length of the separation membrane 1 after cut-off is 87% or more of the length before cut-off, based on the length of the separation membrane 1 before cut-off perpendicular to the axial direction A1.

As described above, by setting the widths at the time of cutting off the both-side sealing parts 11 and the peripheral-side sealing part 12 to 87% or more of the length before cut-off, based on the lengths in two directions of the separation membrane 1 before cut-off, the effective membrane area of the resulting reproduced membrane element RE can be set to 76% or more (87% × 87% = 76%) of the effective membrane area of the used membrane element UE.

### (Step of Replacing Separation Membrane)

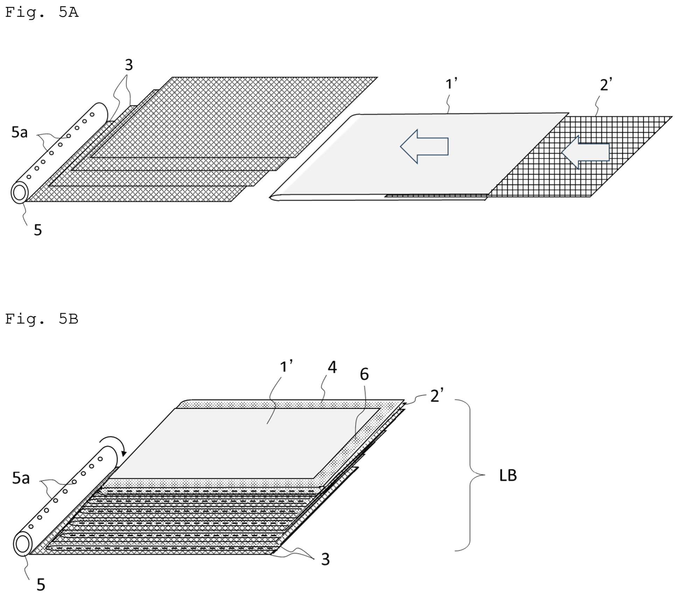

Fig. 4A is an unfolded view illustrating an example of a step of replacing with new separation membranes 1', which shows one of the membrane leaves L2 before replacement in a unfolded state. Fig. 4B shows one of the membrane leaves L2 during replacement in a unfolded state, and virtual lines continuous with the separation membranes 1 indicate a state in which the separation membranes 1 are folded. Fig. 5A is a perspective view illustrating an example of a step of replacing with new separation membranes 1', and indicates a state in which one new separation membrane 1' and one supply-side spacer 2' are inserted into a plurality of permeation-side spacers 3. Fig. 5B is a perspective view illustrating an example of a step of replacing with new separation membranes 1', and illustrates a state in which a plurality of new separation membranes 1' and supply-side spacers 2' are inserted into a plurality of permeation-side spacers 3.

The method for reproducing a membrane element of the present invention includes, for example, as illustrated in Figs. 4A to 5B, a step of replacing at least the separation membranes 1 of the membrane leaf L2 after unfolding and cut-off with the new separation membranes 1'. By this step, as illustrated in Fig. 5B, a member in which the separation membranes 1 are replaced with the new separation membranes 1' can be obtained. At this time, at least the permeation-side spacers 3 are reused, but preferably, the permeation-side spacers 3 and the central pipe 5 with a low degree of deterioration due to use can be reused. In the present embodiment, an example is shown in which the supply-side spacer 2 is also replaced with the new supply-side spacer 2', but it is also possible to use the used supply-side spacer 2 as it is or after washing, repairing, or the like according to the degree of deterioration. This will be described later.

When the separation membranes 1 are replaced, as illustrated in Fig. 4B, the separation membranes 1 in a folded state disposed on both surfaces of the permeation-side spacer 3 are removed. At this time, one or a plurality of permeation-side spacers 3 may adhere to the central pipe 5 directly or with other permeation-side spacer 3 interposed therebetween, and in this case, the separation membranes 1 can be removed to the outside of the central pipe 5 (for example, by a method of an arrow). At that time, the supply-side spacers 2 (not shown) can be removed simultaneously with or separately from the separation membranes 1 in the folded state.

In the present exemplary embodiment, as illustrated in Fig. 5A, an example in which only one permeation-side spacer 3 adheres to the central pipe 5 or the like is shown. However, inner peripheral side ends of a plurality of other permeation-side spacers 3 may adhere to the permeation-side spacer 3 in advance.

Next, as illustrated in Fig. 5A, the new separation membrane 1' in the folded state and the supply-side spacer 2¹ are inserted between the plurality of permeation-side spacers 3. For example, when the plurality of permeation-side spacers 3 are not bonded to each other, it is also possible to alternately place a member including the new separation membrane 1' in the folded state and the supply-side spacer 2' interposed therebetween with the permeation-side spacer 3.

In the step of replacing with the new separation membranes 1', it is preferable to provide an adhesive means for forming a sealing part. For example, in the example illustrated in Fig. 5B, adhesives 4 and 6 for forming sealing parts at three side ends are applied to the side of the separation membrane 1' in contact with the permeation-side spacer 3, but thermal bonding can also be performed using a thermally adhesive sheet or the like. In addition, instead of applying the adhesives 4 and 6 to the separation membrane 1', it is also possible to apply the adhesives 4 and 6 to the permeation-side spacer 3. It is also possible to fix or temporarily fix the inner peripheral side end of the supply-side spacer 2' to a bent portion of the separation membrane 1'.

### (Step of Replacing Supply-Side Spacer)

With regard to the supply-side spacer 2, when the both-side sealing parts 11 of the membrane leaf L are cut off, the both-side ends of the supply-side spacer 2 can be simultaneously cut off to make the lengths of the supply-side spacer 2 and the permeation-side spacer 3 in the axial direction A1 coincide with each other. Therefore, it is possible to use the supply-side spacer 2 as it is.

In addition, it is also possible to reuse the supply-side spacer 2 as a reproduced supply-side spacer after contaminants are removed by washing. It is also possible to replace with a new supply-side spacer.

The supply-side spacer 2 can be replaced after the separation membrane 1 is replaced with the new separation membrane 1', but from the viewpoint of simplifying the process, as illustrated in Fig. 5A, the supply-side spacer 2 is preferably replaced when the separation membrane 1 is replaced with the new separation membrane 1'.

### (Step of Replacing Central Pipe)

With regard to the central pipe 5, when the both-side sealing parts 11 of the membrane leaf L are cut off, the both-side ends of the central pipe 5 can be simultaneously cut off to make the lengths of the central pipe 5 and the permeation-side spacer 3 in axial direction A1 coincide with each other. Therefore, it is possible to use the central pipe 5 as it is.

Further, when the both-side sealing parts 11 of the membrane leaf L are cut off, the both-side ends of the central pipe 5 may be left without being simultaneously cut off, and a reproduced central pipe finally cut into an appropriate length may be used. It is also possible to replace with a new central pipe 5.

However, since the degree of deterioration of the central pipe 5 due to use is low, it is preferable to reuse one obtained by simultaneously cutting off the both-side ends of the central pipe 5 when the both-side sealing parts 11 of the membrane leaf L are cut off as it is. Of course, in a case where reuse is difficult in relation to the position of openings 5a of the central pipe 5, it is preferable to replace with the new central pipe 5.

### (Step of Obtaining Reproduced Membrane Element)

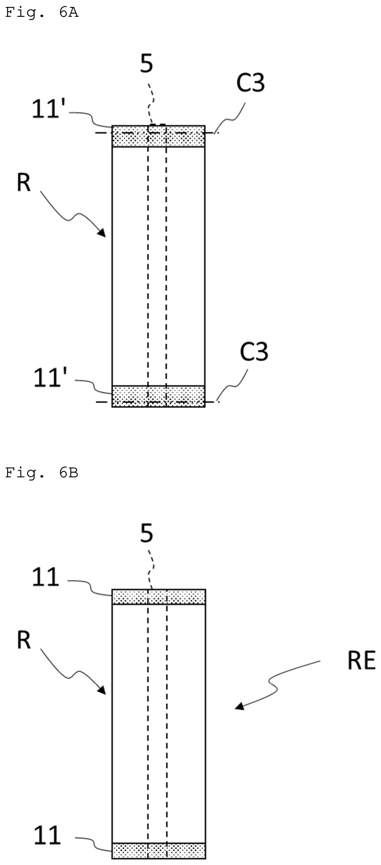

Fig. 6A is a plan view illustrating an example of a case of cutting off the ends of the reproduced membrane element on which the sealing parts are formed, and illustrates a state before cutting off. Fig. 6B is a plan view illustrating an example of a case of cutting off the ends of the reproduced membrane element on which the sealing parts are formed, and illustrates a state after cutting off.

The method for reproducing a membrane element of the present invention includes the step of forming both-side sealing parts 11 and a peripheral-side sealing part 12 that seal both-side ends and a peripheral-side end in the axial direction A1 of the membrane leaf after replacement to obtain a reproduced membrane element RE. By this step, as illustrated in Fig. 6B, a reproduced membrane element RE in which at least the separation membranes 1 are replaced with the new separation membranes 1' can be obtained. In the present embodiment, as illustrated in Figs. 6A to 6B, an example is shown in which, in a state where the membrane leaf after replacement is wound around the central pipe 5, the sealing parts in which an adhesive or the like is solidified are formed, an exterior member is provided as necessary, and then the ends are trimmed.

First, a laminate LB in which at least separation membranes 1 are replaced with new separation membranes 1' and an adhesive means for forming sealing parts is provided is wound around the central pipe 5 (direction of arrow in Fig. 5B). The laminate LB includes members including new separation membranes 1' in the folded state and supply-side spacers 2' interposed therebetween, and permeation-side spacers 3, and the members including the separation membranes 1' and the supply-side spacers 2' and the permeation-side spacers 3 are alternately laminated.

By solidifying the adhesive or the like in a state where the laminate LB is wound around the central pipe 5, it is possible to obtain a roll R in which the both-side sealing parts 11' and the peripheral-side sealing part 12 before trimming are formed as illustrated in Fig. 6A.

Next, as illustrated in Fig. 6B, both ends of the roll R are trimmed along a cutting line C3, so that the reproduced membrane element RE can be obtained. In order to align the end surfaces of the reproduced membrane element RE, trimming is preferably performed. At this time, by also trimming the central pipe 5, the lengths of the central pipe 5 and the roll R can be made the same.

The reproduced membrane element RE may be provided with a new exterior member 15, or may be provided with an upstream-side end member 10 or a downstream-side end member 20 while adjusting the length of the central pipe 5. As the upstream-side end member 10 or the downstream-side end member 20, a new end member may be used, but it is also possible to use an end member collected from the used membrane element UE.

### (Step of Removing Exterior Member)

In the present invention, it is preferable to remove the exterior member 15 after the both-side sealing parts 11 are cut off. This makes it easy to unfold the membrane leaf L1 from which the both-side sealing parts 11 have been cut off and to cut off the peripheral-side sealing part 12.

When the exterior member 15 includes FRP, there are a case where FRP is directly formed on the outer periphery of the roll R and a case where another member is interposed between FRP and the roll R. In either case, by cutting FRP at one or a plurality of places in the direction along the central pipe 5, the exterior member 15 is more easily removed. When another member is interposed, the exterior member 15 after cutting is more easily removed.

When FRP is directly bonded to the outer periphery of the roll R, FRP can be removed by cutting or the like. At the time of cutting, the peripheral-side sealing part 12 positioned at the outermost periphery of the roll R may be damaged, but in the present invention, since the peripheral-side sealing part 12 is removed later, the problem hardly occurs.

### (CO₂ Emission Reduction Effect)

In the method for reproducing a membrane element of the present invention, it is estimated that the effect of reducing CO₂ emissions by reusing raw materials is 16% or more. As conditions for calculation, the reuse rates of the permeation-side spacer, the central pipe, and the supply-side spacer were set to 90%, 90%, and 50%, respectively. In addition, the reduction of CO₂ emissions was calculated as relating to the raw materials and the production step in a case where all new materials were used and in a case where a reused material was used.

### (Another Embodiment of Method for Reproducing Membrane Element)

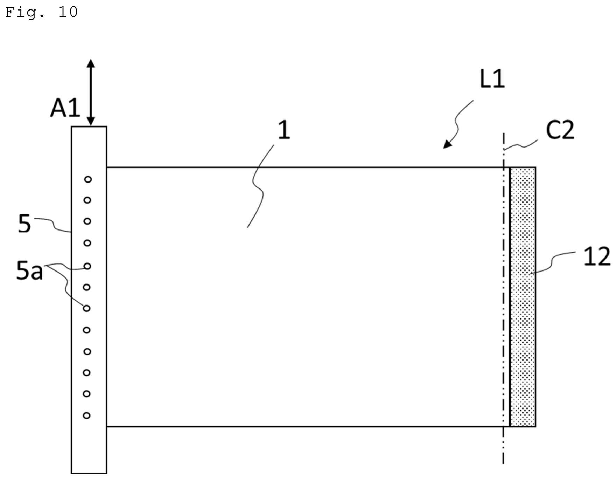

(1) In the above embodiment, an example where, in the step of cutting off the both-side sealing parts 11, the both-side sealing parts 11, the both-side ends of the central pipe 5, the upstream-side end member 10, and the downstream-side end member 20 are cut off was shown. However, as illustrated in Fig. 10, the both-side sealing parts 11, the upstream-side end member 10, and the downstream-side end member 20 may be cut off while leaving the both-side ends of the central pipe 5. That is, it is also possible to leave the end without cutting the central pipe 5.

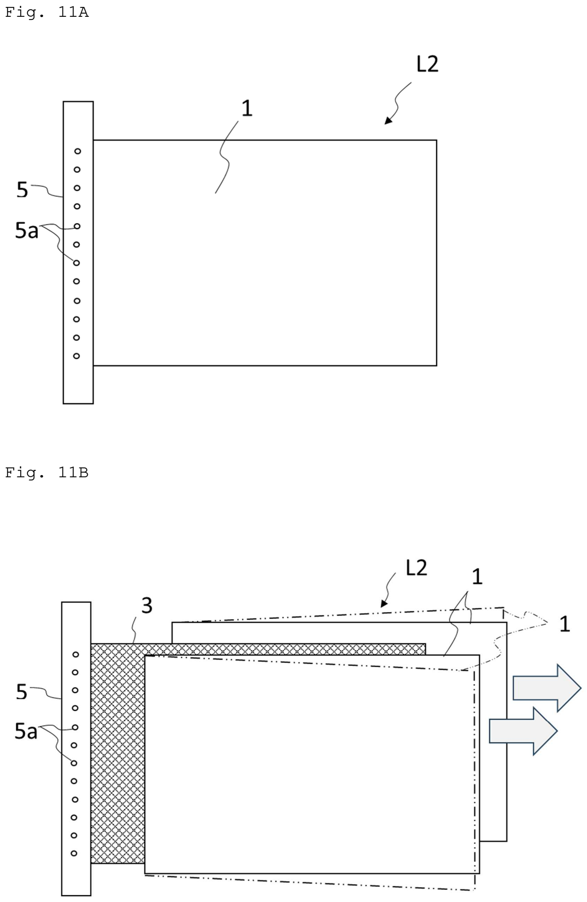

When the both-side sealing parts 11 are cut off while the both-side ends of the central pipe 5 are left, as illustrated in Figs. 11A to 11B, the length of the central pipe 5 is longer than the length of the membrane leaf L2 before replacement in the axial direction A1. In this case, it is possible to cut the both-side ends of the central pipe 5 after completion of the step of obtaining the reproduced membrane element RE or in the steps up to this point. In this case, it is preferable to make the length of the central pipe 5 equal to or closer to the length of the roll R of the reproduced membrane element RE in the axial direction A1.

### (Membrane Module)

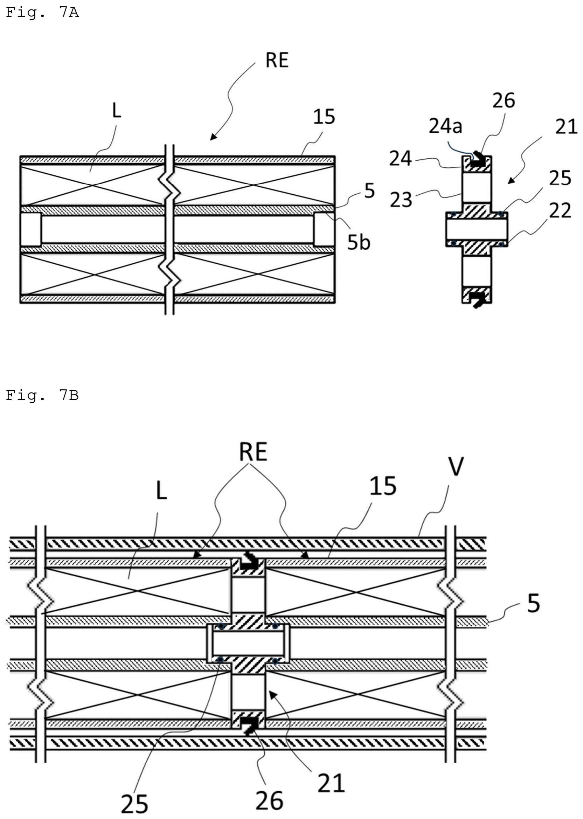

Fig. 7A is a cross-sectional view illustrating an example of a reproduced membrane element and an interconnector used in a membrane module of the present invention. Fig. 7B is a cross-sectional view illustrating an example of a main portion of the membrane module of the present invention.

As illustrated in Figs. 7A to 7B, the membrane module of the present invention is a membrane module including membrane elements and a vessel V accommodating the membrane element, in which the membrane element is a reproduced membrane element RE in which the length of the separation membrane 1 in the axial direction A1 is shortened, produced using a part of a used membrane element UE, and the reproduced membrane elements RE more than the number of the used membrane elements UE accommodated are accommodated in the vessel V.

In the present embodiment, an example is shown in which the reproduced membrane elements RE are connected to each other by an interconnector 21 having an anti-telescoping function. Here, the interconnector 21 includes an inner type fitted to the inner peripheral side of the central pipe 5 and an outer type fitted to the outer peripheral side of the central pipe 5, but in the present embodiment, an example of the inner type is shown.

As the vessel V, any vessel capable of accommodating a general membrane element can be used. The vessel V may be the same as or different from the vessel in which the used membrane element UE has been accommodated.

The reproduced membrane element RE may be a membrane element in which the length of the separation membrane 1 in the axial direction A1 is shortened, produced using a part of the used membrane element UE, and is preferably a reproduced membrane element RE obtained by the method for reproducing a membrane element of the present invention. In the present embodiment, an example is shown in which a reproduced membrane element RE in which the lengths of the separation membrane 1 in the axial direction A1 and the central pipe 5 are the same is used.

In this example, as illustrated in Figs. 7A to 7B, when the central pipe 5 of the used membrane element UE has an enlarged inner peripheral portion as a fitting portion 5b of the interconnector 21, the length of the fitting portion 5b is shortened in the reproduced membrane element RE.

Also, as the reproduced membrane element RE, the upstream-side end member 10 and the downstream-side end member 20 may be integrally provided, and the length of the central pipe 5 may be larger than the length of the separation membrane 1 in the axial direction A1. However, by using the reproduced membrane element RE in which the lengths of the separation membrane 1 and the central pipe 5 are the same, it is easy to suppress a decrease in the total membrane area in the membrane module.

That is, although the effective membrane area per reproduced membrane element RE decreases due to reproduction, the reproduced membrane elements RE are connected to each other by the interconnector 21 having an anti-telescoping function, so that the reproduced membrane elements RE more than the number of the used membrane elements UE accommodated can be accommodated in the vessel, and the total effective membrane area of the reproduced membrane elements RE can be increased.

As illustrated in Figs. 7A to 7B, the interconnector 21 includes a main body portion 22, a flow path forming portion 23, and a seal holding portion 24. The main body portion 22 has a groove for holding a sealing member 25 such as an O-ring, and both sides of the main body portion 22 are inserted into the fitting portion 5b on the inner peripheral side of the central pipe 5 of the reproduced membrane element RE, and the sealing state is maintained by the sealing member 25. When the interconnector 21 having an anti-telescoping function is used, an outer type interconnector can be used, but from the viewpoint of simplifying the structure, an inner type interconnector 21 is preferable.

The flow path forming portion 23 has openings for ensuring the flow of the supply liquid 7 and the like, and is formed of a plurality of plates and the like provided radially. The seal holding portion 24 is formed in an annular shape, and has a groove for holding a sealing member 26 having a U-shaped cross section or the like on the outer periphery thereof. That is, the interconnector 21 has an anti-telescoping function and an outer peripheral sealing function.

In order to accommodate the reproduced membrane elements RE more than the number of the used membrane elements UE accommodated are accommodated in the vessel V, when the reproduced membrane element RE is produced, the length of the reproduced membrane element RE in the axial direction A1, that is, the length of the separation membrane 1' in the same direction, may be adjusted.

For example, when the length of the used membrane elements UE is 40 inches = 1016 mm and the number of the used membrane elements UE accommodated is six, if the length of the reproduced membrane elements RE is 34 inches = 864 mm, by accommodating seven reproduced membrane elements RE in the same vessel V, the entire effective membrane area before and after replacement with the reproduced membrane elements RE can be maintained.

Also, when the reproduced membrane element RE in which the length of the separation membrane 1 in the axial direction A1 is shortened is produced, as described above, by setting the widths at the time of cutting off the both-side sealing parts 11 and the peripheral-side sealing part 12 to 87% or more of the length before cut-off, based on the lengths in two directions of the separation membrane 1 before cut-off, the effective membrane area of the resulting reproduced membrane element RE can be set to 76% or more (87% × 87% = 76%) of the effective membrane area of the used membrane element UE.

Therefore, in the membrane module of the present invention, the effective membrane area of the reproduced membrane element RE is preferably 76% or more of the effective membrane area of the used membrane element UE. In addition, by reducing the width at the time of cutting off the both-side sealing parts 11 or the peripheral-side sealing part 12, it is also possible to set the effective membrane area of the reproduced membrane element RE to 80% or more of the effective membrane area of the used membrane element UE.

### (Other Embodiments of Membrane Module)

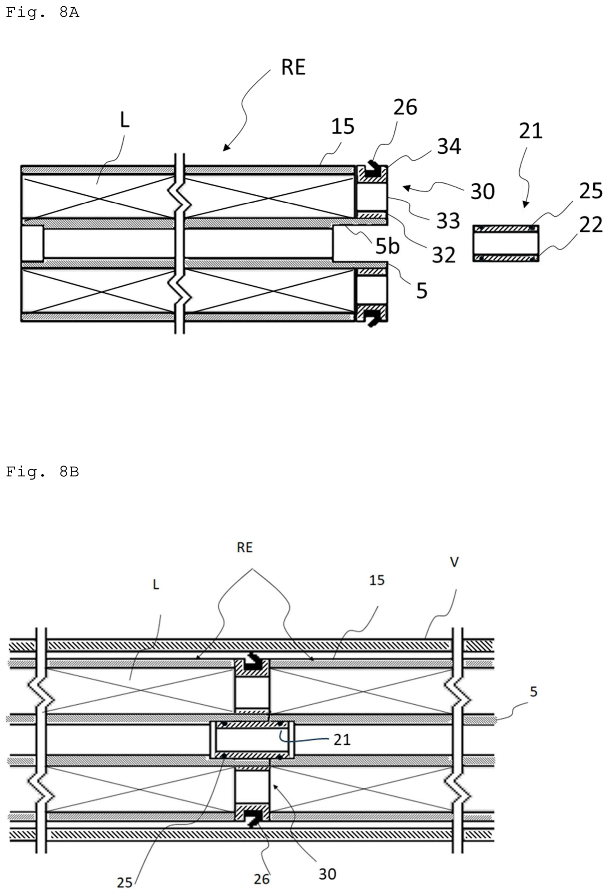

(1) In the present invention, instead of providing the interconnector 21 having an anti-telescoping function, for example, as illustrated in Figs. 8A to 8B, the reproduced membrane element RE may be provided with an anti-telescoping function, and the reproduced membrane elements RE may be connected to each other by an interconnector 21 having a general structure for connecting the central pipes 5 to each other. In this case, the interconnector 21 may be an inner type or an outer type.

Examples of the structure of the reproduced membrane element RE provided with an anti-telescoping function include a structure in which an anti-telescoping device 30 is bonded to the end of the central pipe 5. At this time, the length of the central pipe 5 may be the same as the length of the roll R. However, from the viewpoint of securing strength and the like, for example, as illustrated in Figs. 8A to 8B, a structure is preferable in which the length of the central pipe 5 is made longer than the length of the roll R, and the anti-telescoping device 30 is bonded to the outer periphery of the extended portion.

In the illustrated example, the anti-telescoping device 30 includes an annular portion 32, a flow path forming portion 33, and a seal holding portion 34. The inner peripheral surface of the annular portion 32 is fixed to the end of the central pipe 5, and the flow path forming portion 33 has openings for ensuring the flow of the supply liquid 7 and the like, and is formed of a plurality of plates and the like provided radially. The seal holding portion 34 is formed in an annular shape, and has a groove for holding a sealing member 26 having a U-shaped cross section or the like on the outer periphery thereof. That is, the anti-telescoping device 30 has an anti-telescoping function and an outer peripheral sealing function.

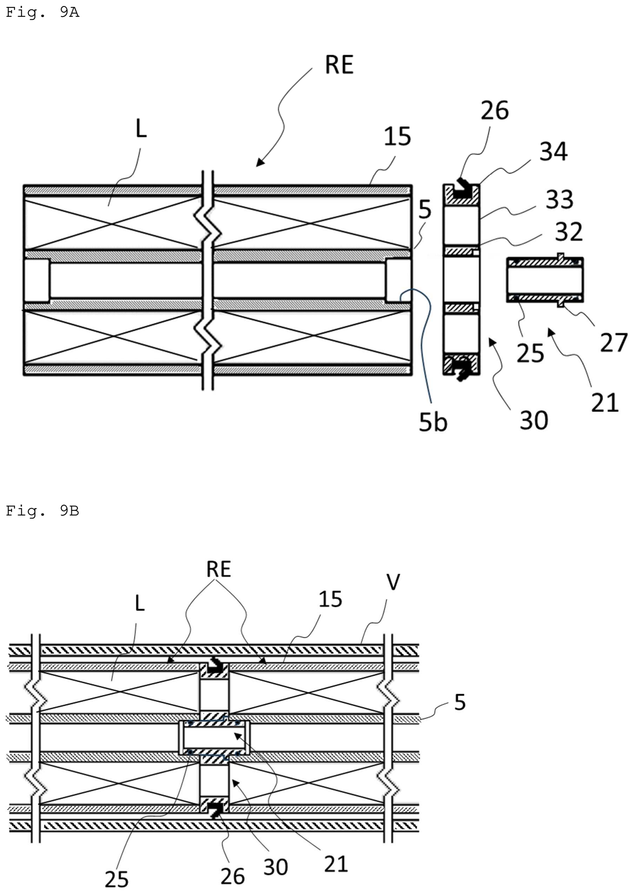

Also, in the interconnector 21, the main body portion 22 has a groove for holding a sealing member 25 such as an O-ring, and both sides of the main body portion 22 are inserted into the fitting portion 5b on the inner peripheral side of the central pipe 5 of the reproduced membrane element RE, and the sealing state is maintained by the sealing member 25.
(2) In the present invention, instead of providing the interconnector 21 having an anti-telescoping function, for example, as illustrated in Figs. 9A to 9B, the anti-telescoping device 30 and the interconnector 21 may be configured as separate bodies. In this case, the interconnector is inserted into a central opening of the anti-telescoping device 30, but it is preferable to provide the interconnector 21 with a locking portion 27 for preventing the anti-telescoping device 30 from moving downstream.
(3) In the present invention, it is preferable to provide a holding length adjustment mechanism on the upstream side of the reproduced membrane element RE on the most upstream side so that the entirety of the plurality of reproduced membrane elements RE connected to each other by the interconnector 21 is accommodated and held at a predetermined position in the vessel V.

Examples of the holding length adjustment mechanism include an adapter that can be connected to a dedicated adapter for the vessel provided most upstream and can be held at an upstream end of the vessel V. In addition, examples of the holding length adjustment mechanism include a ring-shaped member or the like that is combined with such an adapter and can be interposed between the upstream end of the vessel V and the adapter, an adjustment bolt that is provided at the upstream end of the vessel V and presses the adapter to the central side, and the like.

According to the method for reproducing a membrane element of the present invention, since at least a central pipe and a permeation-side spacer can be reused, waste caused by used membrane elements can be reduced, and the amount of plastic newly input in the production of reproduced membrane elements is reduced, so that valuable petroleum resources are saved.

According to the membrane module of the present invention, reproduced membrane elements obtained by reusing at least the central pipe and the permeation-side spacer can be used while suppressing a decrease in the total membrane area.

## Claims

1. A method for reproducing a membrane element for producing a reproduced membrane element using a part of a used membrane element (UE),
wherein the used membrane element includes a plurality of membrane leaves (L) each having a permeation-side spacer (3) interposed between separation membranes (1)facing each other and having both-side sealing parts (11) and a peripheral-side sealing part (12) that seal both-side ends and a peripheral-side end in an axial direction, supply-side spacers (2) interposed between the membrane leaves, and a perforated central pipe (5) around which the membrane leaves and the supply-side spacers are wound, and
the method comprises the steps of:
cutting off at least the both-side sealing parts (11) of the used membrane element (UE);
unfolding the membrane leaves (L) after cut-off and cutting off at least the peripheral-side sealing part (12) of the membrane leaves;
replacing at least the separation membranes (1) of the membrane leaves (L) after unfolding and cut-off with new separation membranes (1'); and
obtaining a reproduced membrane element (RE) by forming both-side sealing parts (11') and a peripheral-side sealing part (12) that seal both-side ends and a peripheral-side end in the axial direction of the membrane leaves after replacement.

2. The method for reproducing a membrane element according to claim 1, wherein when the separation membranes (1) are replaced with the new separation membranes (1'), the supply-side spacers (2) are replaced with reproduced supply-side spacers (2') from which contaminants have been removed by washing or new supply-side spacers.

3. The method for reproducing a membrane element according to claim 1 or 2, wherein the used membrane element(UE) has an exterior member (15), and the exterior member is removed after the both-side sealing parts (11) are cut off.

4. The method for reproducing a membrane element according to claim 1, wherein the central pipe (5) of the used membrane element (UE) is replaced with a reproduced central pipe whose length is adjusted by cutting, or a new central pipe.

5. A membrane module comprising membrane elements and a vessel (V) accommodating the membrane element,
wherein the membrane elements include a reproduced membrane element (RE) in which the length of separation membranes (1') in an axial direction is shortened, produced using a part of a used membrane element (UE), and
the reproduced membrane elements more than the number of the used membrane elements accommodated are accommodated in the vessel (V).

6. The membrane module according to claim 5, wherein the reproduced membrane elements (RE) are connected to each other by an interconnector (21) having an anti-telescoping function, or the reproduced membrane elements having an anti-telescoping function are connected to each other by an interconnector.
